# EUROPÄISCHE PATENTSCHRIFT

(11) **EP 1 298 344 B1**
(45) Veröffentlichungstag und Bekanntmachung des Hinweises auf die Patenterteilung: **14.06.2006**
(21) Anmeldenummer: 02021839.2
(22) Anmeldetag: 27.09.2002
(51) Int. Cl.: F16D 65/28

(54) **Feststellbremsvorrichtung und Verfahren zum Ansteuern der Feststellbremse**
Parking brake device and control method
Frein de stationnement et son procédé de commande

(30) Priorität: 01.10.2001 DE 10148480
(43) Veröffentlichungstag der Anmeldung: 02.04.2003
(73) Patentinhaber: KNORR-BREMSE SYSTEME FÜR NUTZFAHRZEUGE GMBH, 80809 München (DE)
(72) Erfinder: Baumgartner, Johann, 85368 Moosburg (DE); Pahle, Wolfgang, 74080 Heilbronn (DE); Ganzhorn, Dirk, 80809 München (DE)

(56) Entgegenhaltungen:
- EP-A- 1 099 873
- WO-A-96/12634
- WO-A-03/053759
- DE-A- 19 756 519
- DE-A- 19 835 550
- DE-A- 19 906 227

## Beschreibung

Die Erfindung betrifft eine Feststellbremsvorrichtung nach dem Oberbegriff des Anspruchs 1 und ein Verfahren zum Ansteuern der Feststellbremse.

Die Idee der Kombination aus einer pneumatisch betätigten Bremse und einem Elektromotor ist an sich bekannt. So finden Elektromotoren einerseits Verwendung als Antrieb für das Nachstellsystem der Bremsen. Andererseits ist es bekannt, die Feststellbremse elektromotorisch zu betätigen.

Insbesondere bei schweren Nutzfahrzeugen wird als Betätigungsorgan zur Ausführung der Hilfs- und Feststellbremsfunktion üblicherweise ein Federspeicher-Bremszylinder eingesetzt. Dieser Federspeicher-Bremszylinder (FBA-Zylinder genannt) wird auf den Betriebsbremszylinder (BBA-Zylinder genannt) aufgesetzt und überträgt die Betätigungskraft der Speicherfeder über ein Druckelement (Stirnfläche des Kolbenrohres) auf den (Membran-Kolben) des Betriebsbremszylinders und damit auf das jeweilige Betätigungsorgan der Bremse.

Zum Betrieb des Fahrzeuges wird das Betätigungsorgan der Bremse von dieser Federkraft entlastet, indem der zwischen der Speicherfeder und dem Betriebsbremszylinder angeordnete Vorspannkolben derart mit Druck beaufschlagt wird, daß er die Speicherfeder im Sinne eines Lösens der Bremse vom Kolben des Betriebsbremszylinders weg bewegt, wobei die Speicherfeder weiter vorgespannt und während der Fahrt in diesem Zustand gehalten wird.

Zum Einlegen der Feststellbremse wird der Vorspannkolben durch ein Entlüften des zugehörigen Arbeitsraumes vom Druck entlastet und so die Kraft der Speicherfeder in der beschriebenen Weise zur Betätigung der Bremse genutzt. Mit einer geeigneten Ansteuerung kann dieser Entlüftungsvorgang auch abstufbar erfolgen, wodurch die Federspeicherbremse neben der Feststellbremsfunktion auch als Hilfsbremse eingesetzt werden kann.

Derartige Federspeicherbremszylinder haben sich als Feststellbremsvorrichtung an sich bewährt. Weniger vorteilhaft ist jedoch der relativ große Bauraumbedarf. Problematisch wirkt sich ferner das relativ hohe Gewicht aus. Darüber hinaus sind auch die relativ hohen Kosten des Federspeicherzylinders, insbesondere durch die notwendige Druckversorgung und die pneumatische Ansteuerung von Nachteil.

Es hat sich daher die Idee herauskristallisiert, bei elektronisch geregelten Bremsanlagen die Hilfsbremsfunktion über einen unabhängigen Bremsregelkreis zu verwirklichen. Auf diese Weise wird es möglich, die Feststellbremsfunktion mit einem geringeren Aufwand, d.h. ohne die Verwendung eines Federspeichers zu realisieren.

So ist es einerseits möglich, eine mechanische Verriegelung des Fahrzeugrades oder der Antriebswelle bei stillstehendem Fahrzeug vorzusehen (siehe DE 198 15 714 C2 und DE 198 16 801 A1).

Andererseits ist auch eine Verriegelung des Betätigungsorganes der Bremse im eingebremsten Zustand möglich wie in der gattungsbildenden EP 0 995 659 A1 Offenbart.

Darüber hinaus besteht auch noch die Möglichkeit zur Verriegelung des Bremszylinders im eingebremsten Zustand. Eine derartige Variante wird beispielsweise in den Vereinigten Staaten von Amerika genutzt.

An der mechanischen Verriegelung des Fahrzeugrades oder Antriebswelle bei stillstehendem Fahrzeug ist problematisch, daß beim Abstellen des Fahrzeuges auf einer geneigten Fahrbahn die entstehende Hangabtriebskraft auf die Verriegelung wirkt und insofern infolge der auftretenden Reibung eine hohe Lösekraft erforderlich ist. Darüber hinaus kann der formschlüssige Verriegelungsvorgang nicht stufenlos erfolgen, so daß beim Einlegen der Feststellbremse die Verriegelungsposition erst bei einer Bewegung des Rades und damit des Fahrzeuges erreicht wird.

An einer Verriegelung des Betätigungsorganes der Bremse im eingebremsten Zustand sowie an einer Verriegelung des Bremszylinders im eingebremsten Zustand ist nachteilig, daß im eingebremsten Zustand kein Nachstellen der Bremse erfolgt. Ein Nachstellen auch im eingebremsten Zustand ist jedoch bei Scheibenbremsen insofern vorteilhaft, als der Schrumpfungsvorgang an Bremsscheibe und Bremsbacken, der während des Abkühlens einer heiß abgestellten Bremse auftritt, auszugleichen.

Ein besonderer Vorteil einer Federspeicher-Feststellbremse liegt daher darin, daß die Speicherfeder den vorstehend beschriebenen Schrumpfungsvorgang ohne nennenswerten Kraftabfall durch ein weiteres Zustellen des Betätigungsorganes der Bremse ausgleicht und auf diese Weise die Zuspannkraft der Bremse auch bei den beschriebenen Schrumpfungsvorgängen an sich abkühlenden Bremsenbauteilen aufrecht erhält.

Die Erfindung hat daher die Aufgabe, eine Feststellbremsvorrichtung und ein Verfahren zum Ansteuern der Feststellbremsvorrichtung zu schaffen, mit denen auch ohne den Einsatz eines Federspeicherbremszylinders ein Ausgleich des Schrumpfungsvorganges von Bremsscheibe und Bremsbacken beim Abkühlen einer Bremsanlage nach dem Einlegen der Feststellbremse möglich ist.

Die Erfindung löst diese Aufgabe einerseits durch die Feststellbremsvorrichtung nach Anspruch 1 und andererseits durch ein Verfahren zum Ansteuern der Feststellbremsvorrichtung nach Anspruch 8.

Bei der Bremsung wird zunächst der Betriebsbremszylinder eingelegt, z.B. über einen Hilfsbremskreis. Danach erfolgt ein Vordrehen der Drehspindel durch den Getriebeelektromotor bis die Drehspindel am Kolbenstange bzw. an einem dem Kolbenstange vorgeschalteten Element, wie einem Teller oder einer Membran mit Teller anlegt. Da die Spindel ein selbsthemmendes Gewinde aufweist, ist das Betätigungsorgan der Bremse nun im eingebremsten Zustand verriegelt.

Daraufhin erfolgt durch Nachdrehen der Drehspindel ein Ausgleich von Schrumpfungsvorgängen. Hierzu bieten sich verschiedene Verfahren an.

So kann das erforderliche Nachdrehen der Drehspindel zum Nachstellen der Feststellbremsvorrichtung während der Feststellbremsung in Abhängigkeit von einer Messung der Bremskraft im gebremsten Zustand nach dem Zuspannen der Bremse mit dem Betriebsbremszylinder erfolgen.

Alternativ hierzu ist es möglich, daß das Nachdrehen der Spindel zum Nachstellen der Feststellbremsvorrichtung durch ein periodisches Nachstellen über einen vorgegebenen Zeitraum hinweg erfolgt.

Alternativ/optional ist es ferner möglich, daß das Nachdrehen der Drehspindel zum Nachstellen der Feststellbremsvorrichtung mit einer niedrigeren Drehzahl als das Anlegen der Drehspindel bei der Feststellbremsung erfolgt.

Eine Messung der Betätigungskraft kann beispielsweise über einen Sensor erfolgen, z.B. über eine Messung von Bauteilspannungen mittels Dehnungsmeßstreifen. Bei einer Verminderung der Bauteilspannungen und damit der Betätigungskraft der Bremse, z.B. infolge von Schrumpfungsvorgängen abkühlender Bremsenbauteile wird der Elektromotor durch die Überwachungs- und Steuerungselektronik solange mit Strom beaufschlagt, bis die ursprüngliche Betätigungskraft wiederhergestellt wird.

Besonders vorteilhaft ist es, wenn die erforderliche hohe Stellkraft beim Nachstellen der Bremse mit einem klein dimensionierten Elektromotor erzeugt werden kann. Hierzu dient die Auslegung derart, daß die Drehgeschwindigkeit des Spindelsystems mit wenigstens zwei voneinander verschiedenen Geschwindigkeitsstufen - schneller Gang und langsamer Gang - betreibbar ist. Mit dem langsamen Gang - Schleichgang genannt - kann der Vorteil ausgenutzt werden, daß die Schrumpfungsvorgänge infolge von Abkühlung relativ langsam ablaufen, so daß die Verwendung eines gro-βen Übersetzungsverhältnisse möglich ist. Dennoch soll das Verriegeln des Betriebsbremszylinders beim Einlegen der Feststellbremse relativ schnell erfolgen, wozu der schnelle Gang genutzt wird. Beim Überwinden des relativ großen Betätigungsweges beim Zuspannen der Bremse mittels einer Druckluftbetätigung muß zwar ein großer Betätigungsweg überwunden werden. Dieses Überwinden kann jedoch ohne eine größere Betätigungskraft an der Spindel erfolgen, daß der Elektromotor keine Bremsbetätigungskraft aufbringen muß.

Die Einstellbarkeit eines schnellen Ganges und eines langsamen Ganges kann beispielsweise dadurch erfolgen, daß zwischen den Elektromotor und die Drehspindel ein zweigängiges Getriebe geschaltet ist. Vorzugsweise wird dieses mittels einer Rutsch-kupplung und eines Freilaufes selbstschaltend zweigängig ausgelegt.

Alternativ kann vorgesehen sein, daß der Elektromotor ein Reihenschlußmotor ist oder daß er derart ausgelegt wird, daß er wie ein Reihenschlußmotor betreibbar ist.

Neben den vorstehenden mechanischen Varianten ist es auch denkbar, die Steuerungsvorrichtung zur Steuerung von wenigstens zwei verschiedenen Motordrehzahlen auszulegen.

Die Realisierung der Schnellgang-/Langsamgangfunktion auf mechanische oder elektrische Art oder mittels einer Kombination der mechanischen und elektrischen Art hat verschiedene Vorteile.

So ist bei der mechanischen Lösung ein über mindestens zwei Übersetzungsstufen selbstschaltendes Getriebe einsetzbar, wobei zum Überwinden des Hubes ohne Gegenkraft ein Antrieb der Spindel über eine Kupplung unter Umdrehung der letzten Getriebestufe erfolgt und beim Anlegen der Gewindespindel an den Betriebsbremszylinderkolben die Kupplung durchrutscht bzw. öffnet und ein Freilauf zum Antrieb der Spindel mit der letzten Übersetzungsstufe greift und dabei ein hohes Abtriebsmoment auf die Gewindespindel überträgt. Eine derartige mechanische Lösung zeichnet sich durch eine besonders hohe Betriebssicherheit aus.

Alternativ und besonders kostengünstig kann auch eine Drehzahl-Drehmomentcharakteristik-Beeinflussung mit Antriebsmotor über eine geeignete Ansteuerung vorgenommen werden. Es wird dabei eine Drehzahl-Drehmomentcharakteristik eines Gleichstrom-Reihenschlußmotors angestrebt, die ein sehr hohes Anlaufdrehmoment des Motors mit einer sehr hohen Leerlaufdrehzahl verbindet. Hierzu eignet sich einerseits ein echter Reihenschlußmotor. Alternativ kann auch ein elektronisch gesteuerter Elektromotor mit einer derartigen Charakteristik im Hoch- und Niedriglastbereich angesteuert werden. Dies ist z.B. durch eine Ansteuerung mit einem aufgeprägten Strom möglich oder durch eine Wicklungsumschaltung.

Vorteilhafte Ausgestaltungen der Erfindung sind den Unteransprüchen zu entnehmen.

Nachfolgend werden bevorzugte Ausführungsbeispiele anhand der Zeichnung näher beschrieben. Es zeigt:
- Figur 1: eine perspektivische Ansicht einer erfindungsgemäßen Feststellbremsvorrichtung;
- Figur 2: eine geschnittene Ansicht der Feststellvorrichtung aus Figur 2 im gespannten bzw. eingebremsten Zustand und
- Figur 3: eine Schnittansicht der Feststellbremsvorrichtung aus Figur 2 im gelösten Zustand;
- Figur 4 und 5: Flußdiagramme zur Veranschaulichung erfindungsgemäßer Ansteuerungsverfahren.

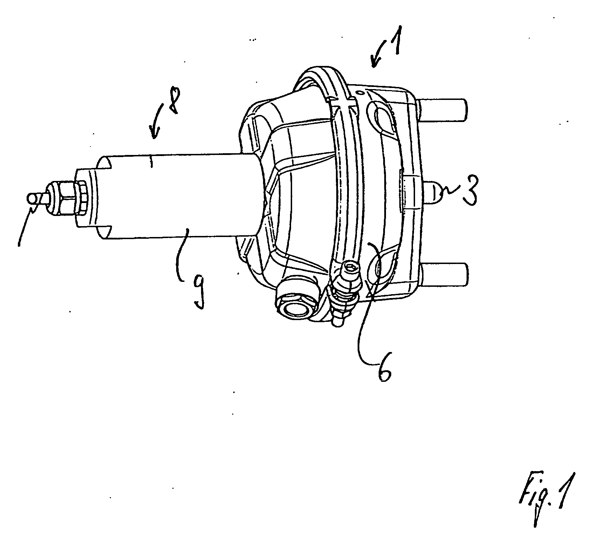

Fig. 1 zeigt ein Feststellbremsvorrichtung für pneumatisch betätigte Trommel- oder Scheibenbremsen mit einem pneumatisch betätigten Betriebsbremszylinder 1, der hier als Membranzylinder ausgelegt ist.

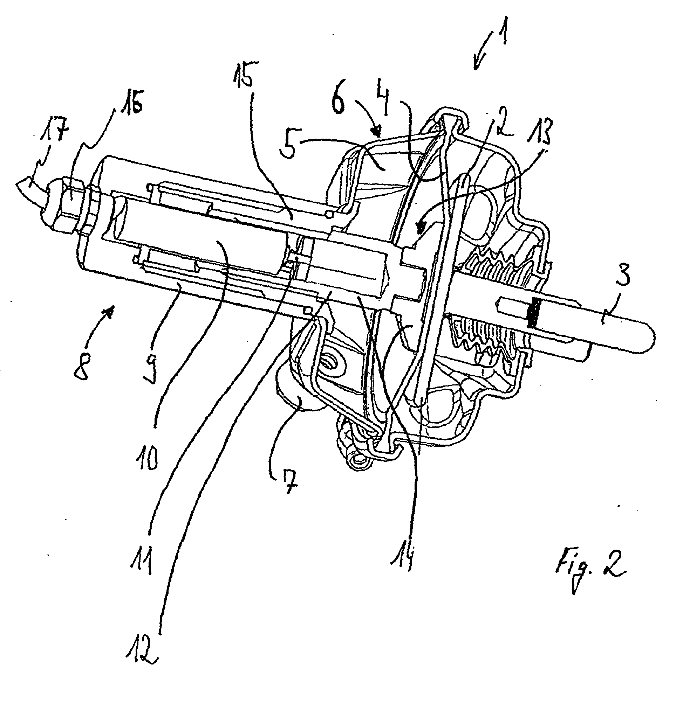

Nach Fig. 2 weist der Membranzylinder einen Teller 2 auf, an dem direkt oder über Zwischenelemente wie ein Druckstück eine Kolbenstange 3 befestigt ist. Auf den Teller 2 wirkt eine Membran 4 ein, welche einen Belüftungsraum 5 abschließt. Beim Belüften des Belüftungsraumes 5 drückt die Membran 4 den Teller 2 mit der Kolbenstange 3 linear nach vorn, so daß die mit dem Membranzylinder zu verbindende Trommel- oder Scheibenbremse zuspannt (Stellung der Fig. 2). Ein hier mehrteiliges Gehäuse 6 mit einem Druckluftanschluß 7, der in den Belüftungsraum 5 mündet, schließt den Membranzylinder nach außen ab.

Nach Fig. 1 ist an das vom Kolbenstange 3 abgewandte Ende des Membranzylinders ein Feststellbremsaktuator 8 angesetzt, welcher ein Gehäuse 9 aufweist, in dem ein Elektromotor 10 - hier ein kombinierter Getriebemotor - angeordnet ist. Alternativ kann dem Elektromotor auch ein separates Getriebe nachgeschaltet werden (hier nicht dargestellt). Das Abtriebsrad 11 des Getriebemotors 10 wirkt auf eine Drehspindel 12 ein, in der es axial verschiebbar aber relativ zu dieser unverdrehbar angeordnet ist. Die Drehspindel 12 weist an ihrem vom Elektromotor 10 abgewandten Ende eine Art Druckstück 13 auf, welches an der Membran 4 des Betriebsbremszylinders zur Anlage gebracht werden kann.

Ein hülsenartiger Ansatz 14 der Drehspindel, welcher mit einem selbsthemmenden Außengewinde versehen ist, ist in eine im Gehäuse 9 angeordnete komplementäre Hülse 15 mit Innengewinde eingeschraubt.

Der Elektromotor 9 ist an einer das Gehäuse 9 durchsetzenden Kabeldurchführung 16 mit einem Kabel 17 mit einer Steuerungseinrichtung - z.B. ein EBS-Steuergerät - verbindbar.

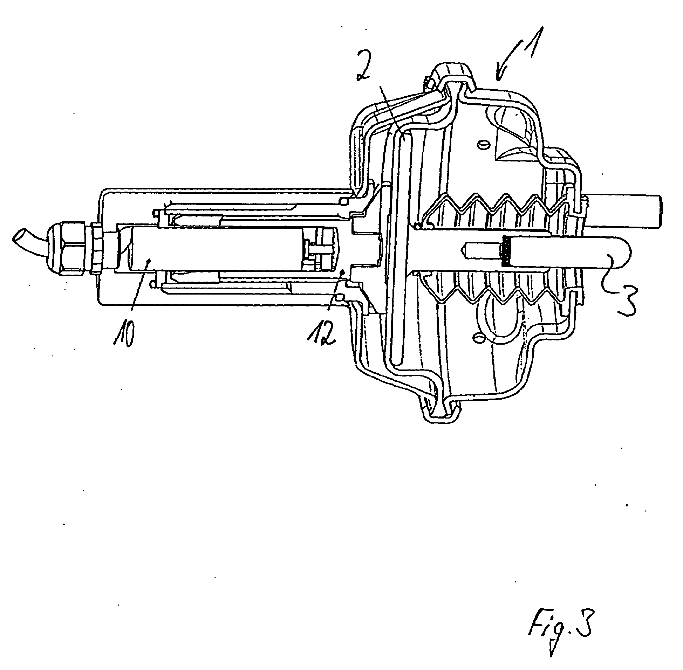

Beim Drehen des Abtriebsrades 11 wird somit das Druckstück linear verschoben. Zum Lösen der Bremse (Fig. 3) wird Kolbenstangte durch die Rückstellkraft der Scheibenbremse an sich sowie eine ergänzende Mebranrückstellfeder nach dem Lösen und dem Rückdrehen der Drehspindel 12 zurückgestellt.

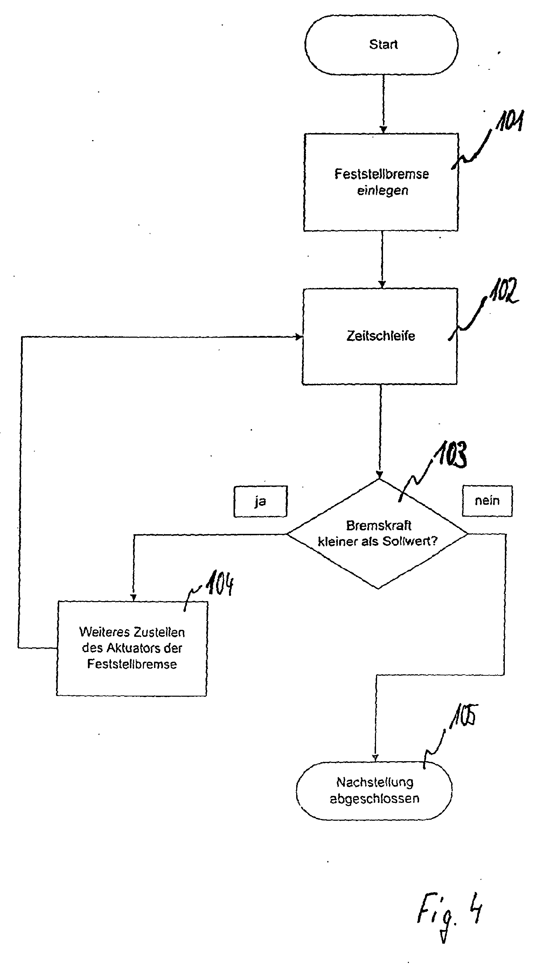

Figur 4 zeigt ein erstes Ansteuerungsverfahren. Nach dem Start der Feststellbremsung wird die Feststellbremse eingelegt (Steuerschritt 101), woraufhin eine Zeitschleife (Steuerschritt 102) gestartet wird, in der zunächst (Steuerschritt 103) überprüft wird, ob die Bremskraft kleiner als ein Sollwert ist. Ist dies der Fall, erfolgt ein weiteres Zustellen des Aktuators der Feststellbremse (Steuerschritt 104). Andernfalls ist der Nachstellvorgang abgeschlossen (Steuerschritt 105). Gegebenenfalls kann diese Zeitschleife nach einem vorgegebenen Zeitraum erneut gestartet werden.

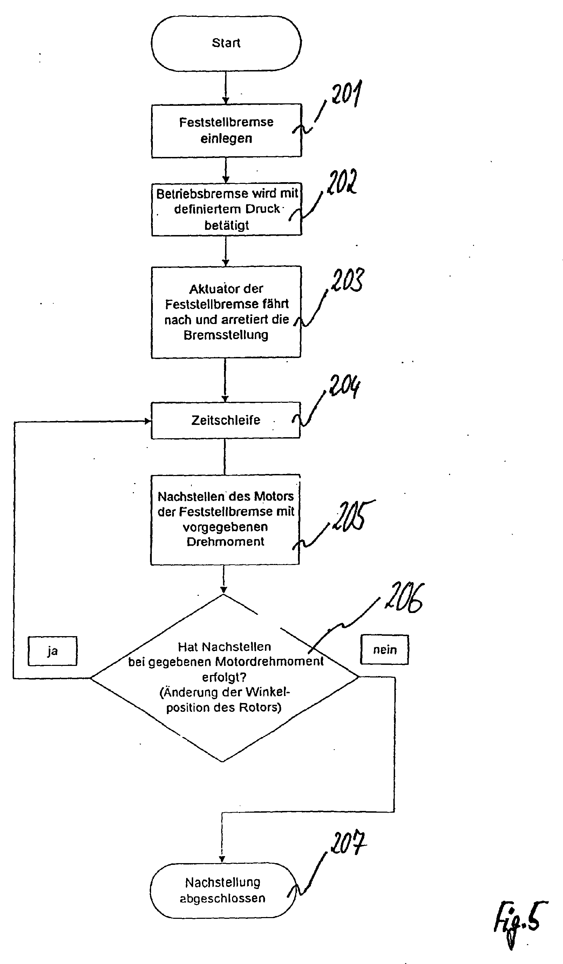

Nach Figur 5 erfolgt nach einem Start der Routine zunächst ein Einlegen der Feststellbremse (Steuerschritt 201), wobei die Betriebsbremse mit definiertem Druck betätigt wird (Steuerschritt 202), woraufhin der Aktuator der Feststellbremse nachfährt und die Bremsstellung arretiert (Steuerschritt 203). Danach wird ähnlich der Figur 1 eine Zeitschleife zum Nachstellen gestartet (Steuerschritt 204), welche ein Nachstellen des Motors der Feststellbremse mit vorgegebenem Drehmoment (Steuerschritt 205) initiiert. Daraufhin wird eine Änderung der Winkelposition des Rotors ermittelt (Steuerschritt 206), um zu entscheiden, ob ein Nachstellen bei dem vorgegebenen Motordrehmoment erfolgt ist. Ist dies der Fall, wird die Zeitschleife im Steuerschritt 204 erneut gestartet. Ist dies nicht der Fall, ist der Nachstellvorgang abgeschlossen und die Routine wird gestoppt (Steuerschritt 207).

Falls die Betriebsbremse ausfällt, kann der Membranzylinder nicht betätigt werden. In diesem Fall läßt der Widerstand der Spindel die Überlastkupplung durchrutschen. Durch die Erfindung ist es nunmehr möglich, den Spindelantrieb über ein Getriebe mit niedriger Drehzahl und hohem Drehmoment anzutreiben, was dazu führt, daß das Fahrzeug auch bei ausgefallener Betriebsbremse sicher abgestellt werden kann.

### Bezugszeichenliste

- Betriebsbremszylinder: 1
- Teller: 2
- Kolbenstange: 3
- Membran: 4
- Belüftungsraum: 5
- Gehäuse: 6
- Druckluftanschluß: 7
- Feststellbremsaktuator: 8
- Gehäuse: 9
- Elektromotor: 10
- Abtriebsrad: 11
- Drehspindel: 12
- Druckstück: 13
- Ansatz: 14
- Hülse: 15
- Kabeldurchführung: 16
- Kabel: 17
- Steuerschritte: 101, 102, 103, 104, 105
- Steuerschritte: 201, 202, 203, 204, 205, 206, 207

## Patentansprüche

1. Feststellbremsvorrichtung für pneumatisch betätigte Trommel- oder Scheibenbremsen mit
a) einem pneumatisch betätigten Betriebsbremszylinder (1) mit einer Kolbenstange (3) zum Betätigen und Lösen der Trommel- oder Scheibenbremse,
b) einem sich an den Betriebsbremszylinder (1) anschließenden, insbesondere auf diesen aufgesetzten, Feststellbremsaktuator (8) mit einer selbsthemmenden, von einem Elektromotor (10) angetriebenen Drehspindel (12), welche auf die Kolbenstange (3) einwirkt, so dass der Betätigungsstößel durch Verdrehen der Drehspindel (12) verschieb- und arretierbar ist,
**dadurch gekennzeichnet, dass**
c) die Drehspindel (12) ein selbsthemmendes Gewinde aufweist, so dass die Stellung der Kolbenstange (3) durch die Drehspindel (12) arretierbar ist, und
d) dem Elektromotor (10) eine Steuereinrichtung zugeordnet ist, die dazu ausgelegt ist, durch Nachdrehen der Drehspindel (12) während der Feststellbremsung einen Ausgleich von in Folge Abkühlens der Bremse auftretenden Schrumpfungen insbesondere der Bremsscheibe und/oder der Bremsbeläge vorzunehmen,
e) die Drehgeschwindigkeit der Drehspindel (12) auf wenigstens zwei von einander verschiedene Geschwindigkeitsstufen -schneller Gang und langsamer Gang- einstellbar ist.

2. Feststellbremsvorrichtung nach einem der vorstehenden Ansprüche, **dadurch gekennzeichnet, daß** zwischen den Elektromotor (10) und die Drehspindel (12) ein zweigängiges Getriebe geschaltet ist.

3. Feststellbremsvorrichtung nach Anspruch 2, **dadurch gekennzeichnet, daß** das zweigängige Getriebe mittels einer Rutschkupplung und eines Freilaufes selbstschaltend zweigängig ausgelegt ist.

4. Feststellbremsvorrichtung nach einem der vorstehenden Ansprüche, **dadurch gekennzeichnet, daß** der Elektromotor ein Reihenschlußmotor ist.

5. Feststellbremsvorrichtung nach einem der vorstehenden Ansprüche, **dadurch gekennzeichnet, daß** der Elektromotor derart ausgelegt ist, daß er wie ein Reihenschlußmotor betreibbar ist.

6. Feststellbremsvorrichtung nach einem der vorstehenden Ansprüche, **dadurch gekennzeichnet, daß** dem Elektromotor eine Einrichtung zur Wicklungsumschaltung zugeordnet ist.

7. Feststellbremsvorrichtung nach einem der vorstehenden Ansprüche, **dadurch gekennzeichnet, daß** der Betriebsbremszylinder (1) ein Membranzylinder ist.

8. Ansteuerungsverfahren für eine Feststellbremsvorrichtung nach einem der vorstehenden Ansprüche, **gekennzeichnet durch** folgende bei einer Feststellbremsung zu durchlaufende Steuerschritte:
A) mit dem Betriebsbremszylinder (1) wird die Bremse zugespannt,
B) die Stellung der Kolbenstange (3) wird **durch** Verdrehen der selbsthemmenden Drehspindel (12) und Anlegen der Drehspindel (12) an die Kolbenstange (3) oder ein dieser vorgeschaltetes Element fixiert,
C) **durch** Nachdrehen der Drehspindel (12) während der Feststellbremsung erfolgt ein Ausgleich von in Folge Abkühlens der Bremse auftretenden Schrumpfungen insbesondere der Bremsscheibe und/oder der Bremsbeläge,
D) das erforderliche Nachdrehen der Drehspindel (12) zum Nachstellen der Feststellbremseinrichtung während der Feststellbremsung erfolgt in Abhängigkeit von einer Messung der Bremskraft im gebremsten Zustand nach dem Zuspannen der Bremse mit dem Betriebsbremszylinder (1),
E) das Nachdrehen der Drehspindel (12) zum Nachstellen der Feststellbremsvorrichtung erfolgt mit einer niedrigeren Drehzahl der Drehspindel (12) als das Anlegen der Drehspindel (12) während der Feststellbremsung.

9. Ansteuerungsverfahren nach Anspruch 8, **dadurch gekennzeichnet, daß** das Nachdrehen der Drehspindel zum Nachstellen der Feststellbremsvorrichtung während der Feststellbremsung durch ein periodisches Nachstellen über einen vorgegebenen Zeitraum erfolgt.

10. Ansteuerungsverfahren nach Anspruch 8 oder 9, **dadurch gekennzeichnet, daß** während des Nachdrehens der Drehspindel zum Nachstellen der Feststellbremsvorrichtung eine Drehwinkelermittlung erfolgt.

## Claims

1. Parking-brake device for pneumatically operated drum or disc brakes, comprising
(a) a pneumatically operated service brake cylinder (1) including a piston rod (3) for operating and releasing said drum or disc brake,
(b) a parking-brake actuator (8) joining said service brake cylinder, in particular placed thereon, which includes a self-locking rotary spindle (12) driven by an electric motor (10), which spindle acts upon said piston rod (3) so that the operating follower may be displaced and locked by rotation of said rotary spindle (12),
**characterised in that**
(c) said rotary spindle (12) comprises a self-locking thread so that the position of said piston rod (3) may be locked by said rotary spindle (12), and
(d) a control means is associated with said electric motor (10), which is designed for compensating shrinkage occurring as a consequence of cooling of the brake, particularly of the brake disc and/or the brake linings, by further rotating said rotary spindle (12) during parking-brake application,
(e) the rotary speed of said rotary spindle (12) is adjustable to at least two among various different speed levels - high-speed operation and low-speed operation - which are different from each other.

2. Parking-brake device according to Claim 1, **characterised in that** a two-speed gear system is inserted between said electric motor (10) and said rotary spindle (12).

3. Parking-brake device according to Claim 2, **characterised in that** said two-speed gear system is designed for two-speed automatic switching by means of a slip-friction clutch and an overrunning clutch.

4. Parking-brake device according to any of the preceding Claims, **characterised in that** said electric motor is a series-wound motor.

5. Parking-brake device according to any of the preceding Claims, **characterised in that** said electric motor is so designed that it may be operated like a series-wound motor.

6. Parking-brake device according to any of the preceding Claims, **characterised in that** a means for switching over the windings is associated with said electric motor.

7. Parking-brake device according to any of the preceding Claims, **characterised in that** said service brake cylinder (1) is a membrane cylinder.

8. Method of controlling a parking-brake device according to any of the preceding Claims, **characterised by** the following control steps to be passed through in application of the parking-brake:
(A) the brake is applied by means of said service brake cylinder (1),
(B) the position of said piston rod (3) is fixed by rotating said self-locking rotary spindle (12) and by applying said rotary spindle (12) to said piston rod (3) or an element upstream thereof,
(C) compensation of shrinkage, in particular of said brake disc and/or said brake linings, which occurs as a consequence of cooling of the brake, by further rotating said rotary spindle (12) during parking-brake application,
(D) the required further rotation of said rotary spindle (12) for adjustment of said parking-brake means during parking-brake application takes place in response to measurement of the braking force in the state of brake application after application of the brake by means of the service brake cylinder (1),
(E) the further rotation of said rotary spindle (12) for adjustment of said parking-brake device is performed at a rotational speed of said rotary spindle (12), which is lower than the speed in application of said rotary spindle (12) during parking-brake application.

9. Control method according to Claim 8, **characterised in that** the further rotation of said rotary spindle for adjustment of said parking-brake device is performed during service brake application by periodic adjustment over a predetermined period of time.

10. Control method according to Claim 8 or 9, **characterised in that** the rotary angle is detected during further rotation of said rotary spindle for adjustment of said parking-brake device.

## Revendications

1. Dispositif à frein de stationnement pour freins à tambour ou à disque à commande pneumatique, comprenant
(a) un cylindre de frein de service (1) à commande pneumatique, comprenant une tige de piston (3) à actionner et desserrer ledit frein à tambour ou à disque,
(b) un acteur du frein de stationnement (8), qui se joint audit cylindre de frein de service, en particulier en étant placé sur le dernier, qui comprend une vis tournante (12) autobloquante, entraînée par un moteur électrique (10), cette vis agissant sur ladite tige de piston (3) d'une telle manière, que le poussoir de commande puisse se déplacer et serrer par la rotation de ladite vis tournante (12),
**caractérisé en ce que**
(c) ladite vis tournante (12) comprend un filetage autobloquant d'un tel type, que la position de ladite tige de piston (3) soit capable d'être serrée par ladite vis tournante (12), et
(d) un moyen de commande est affecté audit moteur électrique (10), qui est conçu à compenser le rétrécissement apparaissant en conséquence du refroidissement du frein, en particulier du disque de frein et/ou des garnitures de freins, par rotation continuée de ladite vis tournante (12) au cours de l'actionnement du frein de stationnement,
(e) la vitesse de rotation de ladite vis tournante (12) est ajustable à au moins deux parmi plusieurs niveaux de rapport différents - haut rapport et petit rapport - qui sont différents l'un de l'autre.

2. Dispositif à frein de stationnement selon la revendication 1, **caractérisé en ce qu'**un engrenage à deux rapports est inséré entre moteur électrique (10) et ladite vis tournante (12).

3. Dispositif à frein de stationnement selon la revendication 2, **caractérisé en ce que** ledit engrenage à deux rapports est conçu pour un changement automatique à deux rapports moyennant un accouplement à friction et une roue libre.

4. Dispositif à frein de stationnement selon une quelconque des revendications précédentes, **caractérisé en ce que** ledit moteur électrique est un moteur série.

5. Dispositif à frein de stationnement selon une quelconque des revendications précédentes, **caractérisé en ce que** ledit moteur électrique est conçu d'une telle manière, qu'il soit commandable comme un moteur série

6. Dispositif à frein de stationnement selon une quelconque des revendications précédentes, **caractérisé en ce qu'**un moyen à commuter les bobines est affecté audit moteur électrique.

7. Dispositif à frein de stationnement selon une quelconque des revendications précédentes, **caractérisé en ce que** ledit cylindre de frein de service (1) est un cylindre à diaphragme.

8. Procédé à commander un dispositif à frein de stationnement selon une quelconque des revendications précédentes, **caractérisé par** les étapes des commande suivantes à passer au cours de l'actionnement du frein de stationnement :
(A) le frein est actionné moyennant ledit cylindre de frein de service (1),
(B) la position de ladite tige de piston (3) est fixée par rotation de ladite vis tournante (12) autobloquante et par l'application de ladite vis tournante (12) contre ladite tige de piston (3) ou un élément en amont,
(C) compensation du rétrécissement, en particulier dudit disque de frein et/ou desdites garnitures de freins, qui apparaît en conséquence du refroidissement du frein, par rotation continuée de ladite vis tournante (12) au cours de l'actionnement du frein de stationnement,
(D) la rotation continuée requise de ladite vis tournante (12) pour l'ajustement dudit moyen à frein de stationnement au cours de l'actionnement du frein de stationnement se fait en réponse au mesurage de l'effort de freinage en état d'actionnement de frein suivant l'actionnement du frein moyennant cylindre de frein de service (1),
(E) la rotation continuée de ladite vis tournante (12) pour l'ajustement dudit dispositif à frein de stationnement se fait à une vitesse de rotation de ladite vis tournante (12), qui est plus petite que la vitesse en commande de ladite vis tournante (12) au cours de l'actionnement du frein de stationnement.

9. Procédé de commande selon la revendication 8, **caractérisé en ce que** la rotation continuée de ladite vis tournante pour l'ajustement dudit dispositif à frein de stationnement se fait au cours du freinage par frein de service, par ajustement périodique au cours d'une période de temps prédéterminée.

10. Procédé de commande selon la revendication 8 ou 9, **caractérisé en ce que** l'écart angulaire est détecté au cours de la rotation continuée de ladite vis tournante pour l'ajustement dudit dispositif à frein de stationnement.
